# EUROPEAN PATENT APPLICATION

(11) **EP 1 198 086 A2**
(43) Date of publication of application: **17.04.2002**
(21) Application number: 01123395.4
(22) Date of filing: 11.10.2001
(51) Int. Cl.: H04J 3/06, H04J 3/14

(54) **Apparatus and method for managing alignment of pointers in a telecommunications system**

(30) Priority: 13.10.2000 US 689025
(71) Applicant: Alcatel USA Sourcing, L.P., Plano, TX 75075 (US)
(72) Inventor: Rush, Frederick Alan, Rowlett, Texas 75089 (US)
(74) Representative: Dreiss, Fuhlendorf, Steimle & Becker

(57) **Abstract**

An apparatus for managing pointer alignment between channel-pairs includes: (a) a pointer selector; (b) a pointer observer; (c) a control unit; and (d) a pointer value distributor. The pointer selector and the pointer observer respond to the control unit to generate an adjusted pointer value for each channel of each channel-pair. The adjusted pointer values for each channel of the channel-pair cooperate to reduce a difference between pointer values for the channel-pair. The pointer value distributor and the pointer observer cooperate with the control unit to distribute each respective adjusted payload pointer value to its respective channel. The method includes the steps of: (a) in no particular order: (1) providing pointer value input lines (2) providing at least one input selector for selective coupling with input lines; (3) providing at least one pointer observer coupled with the input selector; (4) providing at least one control unit coupled with the input selector and the pointer observer; and (4) providing at least one pointer distributor coupled with the pointer observer and the control unit; (b) cooperatively operating the input selector, the pointer observer and the control unit according to a predetermined arrangement to generate first and second adjusted pointers appropriately to reduce differences between the first and second adjusted pointers; and (c) cooperatively operating the pointer distributor with the control unit and the pointer observer to correctly distribute the first and second adjusted pointers to the selected channel-pair.

## Description

### BACKGROUND OF THE INVENTION

The present invention is directed to transmission of information in a telecommunication system, and especially to errorless switching between parallel information channels in a telecommunication system.

Some telecommunication systems convey information in parallel channels in order that there may be an inherently increased security against lost information during transit. One example of such a telecommunication system is a SONET (Synchronous Optical Network) system. A SONET telecommunication system typically carries two channels, known as a "working" channel and a "protect" channel. The system may switch from the working channel to the protect channel under various predetermined conditions that may indicate corruption of information being received via the working channel. Such occasions indicating corruption of information may include, for example, excessive noise on the channel because of lightning or other natural phenomena, or maintenance being performed upon the working channel. It is important that switching from one channel to another channel - either from the working channel to the protect channel, or from the protect channel to the working channel - be accomplished without errors. That is, no "hits" should be incurred in the information when switching between parallel transmission channels.

The parallel channels are supposed to be synchronized in time, and are generally so synchronized when transmitted. However, upon arrival of the parallel signals at a receiver, there is commonly some misalignment because one of the parallel channels may have been routed via different switches than the other channel, or for some other reason. Thus, in such parallel transmitting telecommunication systems, the frames of the respective parallel channels are aligned to be time-coincident. In some such telecommunication systems, such as in the SONET system, there are overhead portions of information within a frame, and there are information payload portions of the frame. The information payload is situated in the same locus in each of the working and protect channel frames when transmitted. In the SONET standard governing operation of a SONET telecommunication system, the payload is allowed to "float" within the frame during transit. For that reason, merely aligning frames to effect time-coincidence between them is not enough to provide that switching between channels will be effected without a hit.

The information payload locus is identified by an information payload pointer within the frame, such as in a SONET frame. Preferably, and actually in a SONET system, the locus of the information payload pointer within the frame is fixed during transit. Thus, in addition to aligning frames, there must be an aligning of payload loci between the working and protect channels as well.

The need for such frame alignment has been addressed by such solutions as the pointer processing circuit disclosed in U.S. Patent 5,335,223 to Hatsumi Iino for "Pointer Processing Circuit in SONET System". However, when implementing the disclosure of Iino, one still is faced with possibly misaligned payloads in the now-aligned frames.

One approach to aligning payloads within frames is disclosed in U.S. Patent 5,051,979 to S. Chandhuri and A. Malone for "Method and Apparatus for Errorless Switching". The disclosure of the '979 patent requires two complete pointer processor functions to accomplish payload alignment. That is, the '979 disclosure required the generation of two distinct SONET frames before performing a hitless selection. The circuitry required to implement the '979 disclosure was complex in its requirement to regenerate a new SONET frame for each of the two channels before an errorless switch between the channels can occur.

The above shortcoming in the '979 patent was described and overcome in U.S. Patent Application Ser. 09/354,865, filed July 16, 1999, by Edmund K. Cher and David C. Sawey for "Hit-Less Switching Pointer Aligner Apparatus and Method", which application is assigned to the assignee of the present application. The Cher Application solved the problems noted regarding the solution offered by the '979 patent. However, the Cher Application solution itself suffers from requiring a high degree of connectivity between two pointer processing elements. If the Cher Application solution is employed in a system where the two pointer processors are separated (e.g., on two different circuit cards), it would be a difficult application. In fact, remote location of pointer processors is not uncommon in real-world telecommunication systems.

The shortcoming of the Cher Application was overcome in U.S. Patent Application Ser. 09/476,060, filed December 30, 1999, by David C. Sawey for "Apparatus and Method for Pointer Alignment in a Telecommunication System", which application is assigned to the assignee of the present invention. The Sawey Application did not address the problem of how to accomplish pointer alignment in large telecommunication systems involving numerous channels arranged in channel-pairs.

There is a need for an apparatus and method for achieving information payload pointer alignment in large telecommunication systems involving numerous channels arranged in channel-pairs. The present invention achieves such a result by distributing pointer adjustment among a plurality of pointer adjustment structures. Primary control of the various pointer adjustment structures is exercised by a master control unit or by a plurality of master control units operating cooperatively.

### SUMMARY OF THE INVENTION

An apparatus for managing alignment of payload frames within information frames between channel-pairs, the channel-pairs being among a plurality of communication channels, includes: (a) at least one pointer selector unit coupled to receive payload pointer values for selected communication channels; (b) at least one pointer observer unit coupled with the at least one pointer selector unit; (c) at least one control unit coupled with the at least one pointer selector unit and coupled with the at least one pointer observer unit; and (d) at least one pointer value distributor unit coupled with the at least one pointer observer unit and coupled with the at least one control unit. The at least one pointer selector unit and the at least one pointer observer unit respond to the at least one control unit to generate a respective adjusted payload pointer value for each respective channel of each channel-pair. The adjusted payload pointer values for each respective channel of each the channel-pair cooperate to reduce a difference between payload pointer values for the channel-pair. The at least one pointer value distributor unit and the at least one pointer observer unit cooperate with the at least one control unit to distribute each respective adjusted payload pointer value to its respective channel.

The present invention also contemplates a method for controlling employment of pointer values for coordinating alignment of payload information among a plurality of channel-pairs in a telecommunication system in which each respective channel-pair includes a respective first communication channel and second communication channel. Each respective first communication channel and second communication channel carries substantially similar information arranged in a plurality of generally time-coincident, substantially corresponding frames. A predetermined aspect of each frame is indicated by a pointer value. The method includes the steps of: (a) in no particular order: (1) providing a plurality of pointer value input lines coupled with the plurality of communication channels with each channel-pair having a first pointer value associated with its respective first communication channel and a second pointer value associated with its respective second communication channel; (2) providing at least one pointer value input selector configured for selective coupling with particular pointer value input lines; (3) providing at least one pointer observer unit coupled with the at least one pointer value input selector; (4) providing at least one control unit coupled with the at least one pointer value input selector and with the at least one pointer observer unit; and (4) providing at least one pointer value distributor unit coupled with the at least one pointer observer unit and with the at least one control unit. The method continues with the steps of: (b) designating a selected channel-pair among the plurality of channel-pairs; (c) cooperatively operating the at least one pointer value input selector, the at least one pointer observer unit and the at least one control unit according to a predetermined arrangement to generate a first adjusted pointer value for the respective first communication channel; (d) cooperatively operating the at least one pointer value input selector, the at least one pointer observer unit and the at least one control unit according to a predetermined arrangement to generate a second adjusted pointer value for the respective second communication channel; effecting steps (c) and (d) to generate the first adjusted pointer value and the second adjusted pointer value appropriately to effect reduction of differences between the first adjusted pointer value and the second adjusted pointer value; (e) cooperatively operating the at least one pointer value distributor unit with the at least one control unit and the at least one pointer observer unit to effect correct distribution of the first adjusted pointer indicator value and the second adjusted pointer indicator value to the particular selected channel-pair; (f) designating a next selected channel-pair among the plurality of channel-pairs; and (g) repeating steps ( c) through (g).

Frame aligning to effect time-coincidence in corresponding frame-sets is commonly carried out in a SONET system, for example, using elastic buffer memories in parallel in the working and protect channels through a process of rebuilding frames. Thus, there is an opportunity to relocate payloads within corresponding frames in a frame-set during such a rebuilding to improve alignment of information payloads. When the payloads are aligned, the system can switch between channels without experiencing any errors, or hits.

Such payload alignment is often a stepwise correction process. For example, in a SONET system the information payload pointer value (the value that identifies the starting byte of the information payload within the frame) may only be changed one byte per adjustment. Thus, when a difference between loci of information payloads in a frame-set (i.e., corresponding frames in the two channels) is perceived (e.g., by a difference in payload pointer values), changes are effected in later-arriving frame-sets, because the frame-set in which the differences are noted has already been transmitted on through the system. The next-arriving frame-set may have its payload pointer values altered appropriately to reduce differences in payload loci during the rebuilding that is effected to accomplish frame alignment for time-coincidence. Thus, if the locus difference for information payloads in frames of a frame-set between the two channels is greater than can be corrected for in one iteration, it will be necessary to effect the required correction stepwise over more than one later-arriving frame-set.

Some smoothing of corrections in payload pointer values, and the consequent relocating of the payload locus within the frame, can be accomplished by distributing corrections "upstream" toward the transmitter of the communication signal. In such manner, the amount of misalignment in the information payloads of the frame-set may be reduced along the transmission path to minimize the required size of the parallel memory means at the receiver. Such an implementation of the present invention may be effected "upstream" so far as the two-channel transmission extends. SONET systems periodically combine the working and protect channel into a single channel for splitting anew into two channels for transmission. By such combining and splitting anew, integrity of the duplication of signals between channels is assured. Clearly, corrections for payload misalignment may not be distributed "upstream" beyond the last such combining-and-splitting-anew station in the system.

It is, therefore, an object of the present invention to provide an apparatus and method for managing alignment of payload frames within information frames between channel-pairs for achieving information payload pointer alignment in large telecommunication systems involving numerous channels arranged in channel-pairs.

Further objects and features of the present invention will be apparent from the following specification and claims when considered in connection with the accompanying drawings, in which like elements are labeled using like reference numerals in the various figures, illustrating the preferred embodiments of the invention.

### BRIEF DESCRIPTION OF THE DRAWINGS

Fig. 1 is a schematic diagram of a telecommunication system employing parallel channel transmission for information integrity.
Fig. 2 is a schematic diagram of a system for controlling pointer alignment appropriate for employment with the present invention.
Fig. 3 is a schematic diagram illustrating parameters associated with aligning pointers between two communication channels in a telecommunication system.
Fig. 4 is a schematic diagram of an embodiment of the present invention.
Fig. 5 is a schematic diagram of the preferred embodiment of the present invention.
Fig. 6 is a flow chart illustrating the preferred embodiment of the method of the present invention.

### DETAILED DESCRIPTION OF THE PREFERRED EMBODIMENT

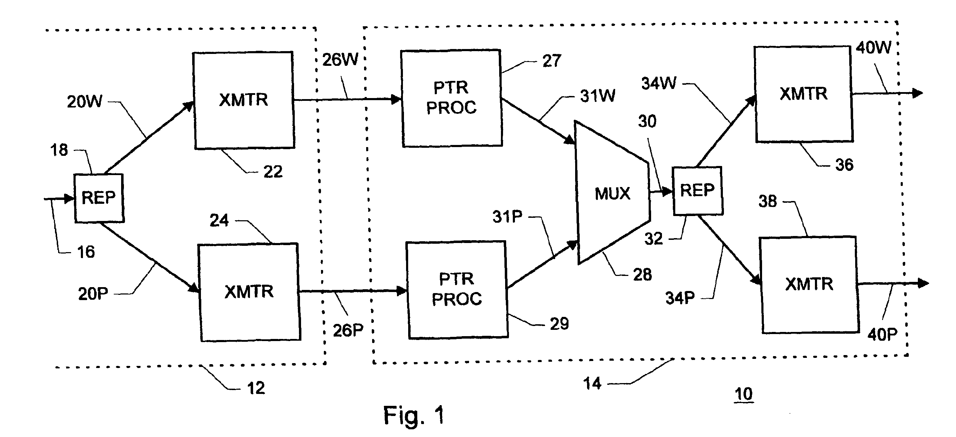

Fig. 1 is a schematic diagram of a telecommunication system employing parallel channel transmission for information integrity. In Fig. 1, a telecommunication system 10 includes a transmitter station 12 and a receiver station 14. Transmitter station 12 is shown only in part, as will be apparent. In Fig. 1, a portion of transmitter station 12 processes a signal on a single-channel signal 16 connected with a replicator 18. Replicator 18 replicates the signal received on single-channel 16 for presentation on a working channel 20W and a protect channel 20P. Channels 20W, 20P are substantially parallel channels carrying complimentary signals; the signal on channel 20P is virtually a copy of the signal carried on channel 20W. Channels 20W, 20P deliver their respective signals to transmitters 22, 24. Transmitter 22 transmits a first signal on a working transmission channel 26W. Transmitter 24 transmits a second signal on a protect transmission channel 26P. The second signal carried on protect transmission channel 26P is substantially a copy of the first signal carried on working transmission channel 26W.

Receiver station 14 receives signals from channels 26W, 26P at pointer processors 27, 29. Pointer processors 27, 29 frame-align the signals carried on transmission channels 26W, 26P to establish the two signals in time-coincident complementary frames establishing a succession of frame-sets. Pointer processors 27, 29 also align payload loci and associated payload pointers of respective frame-sets. That is, pointer processors 27, 29 adjust payload pointer values for respective frames in frame-sets so that each frame-set is frame-aligned and payload-aligned. Pointer processors 27, 29 present frame-aligned and payload-aligned frame-sets via internal channels 31W, 31P to a multiplexer 28. Multiplexer 28 employs predetermined criteria for selecting the signal carried by one of internal channels 31W, 31P for forwarding on a single-channel 30 to a replicator 32. Replicator 32 replicates the signal received on single-channel 30 for presentation on a working channel 34W and a protect channel 34P. Channels 34W, 34P are substantially parallel channels carrying complimentary signals; the signal on channel 34P is virtually a copy of the signal carried on channel 34W. Channels 34W, 34P deliver their respective signals to transmitters 36, 38. Transmitter 36 transmits a first signal on a working transmission channel 40W. Transmitter 38 transmits a second signal on a protect transmission channel 40P. The second signal carried on protect transmission channel 40P is substantially a copy of the first signal carried on working transmission channel 40W. Channels 40W, 40P are delivered downstream to another element of telecommunication system 10 (not shown in Fig. 1) for ultimate delivery of the communication information to an intended receiver.

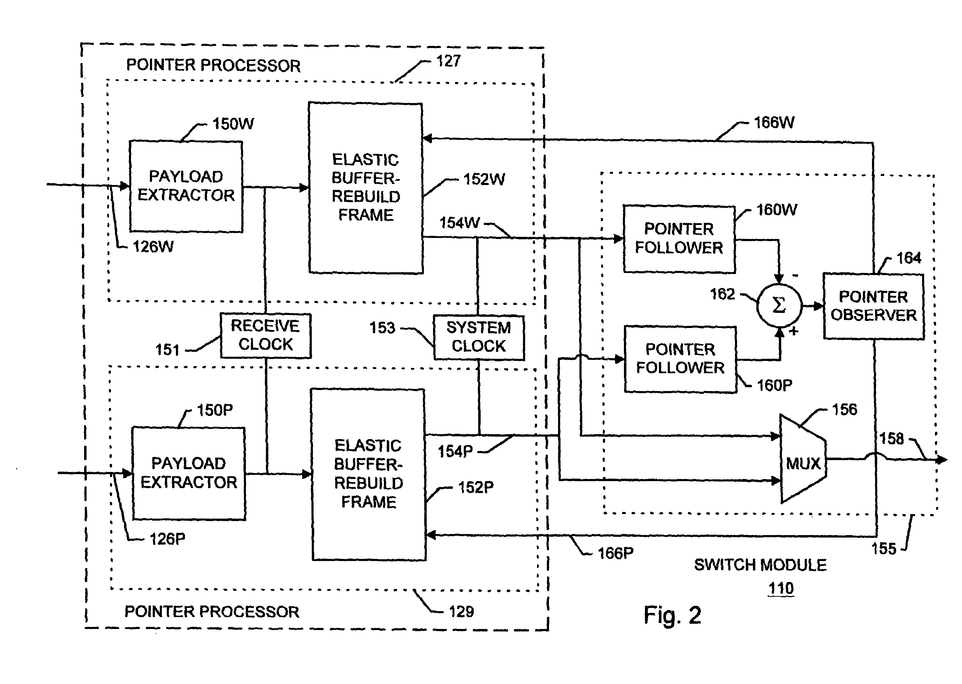

Fig. 2 is a schematic diagram of a system for controlling pointer alignment appropriate for employment with the present invention. In Fig. 2, a receiver station 110 includes a first pointer processor 127 and a second pointer processor 129. In keeping with the terminology developed in connection with describing Fig. 1, first pointer processor 127 is associated with a working transmission channel 126W, and second pointer processor 129 is associated with a protect transmission channel 126P.

Telecommunication systems often rebuild entire frames in their operation, but to avoid excessive irrelevant detail in order to simplify the explanation regarding the present invention, this description will address only pertinent portions of message processing that relate to operation of the present invention. It should be understood that frame rebuilding includes all overhead information as well as payload information. Such frame rebuilding is commonly accomplished in memory-rebuild frame means. Such memory-rebuild frame means are preferably embodied in an elastic buffer configuration having sufficient capacity to accommodate the operation required for "dissecting" a frame and rebuilding the frame in a desired configuration. The desired rebuilt configuration may be established by predetermined criteria, or may be determined by feedback provided for effecting payload alignment, as contemplated by the present invention. The embodiment of a memory-rebuild frame means as contemplated by the present invention includes any component having storage capacity and a facility for rearranging parts of frames into a desired order. The required facility may be embodied in software, firmware, hardware or a combination of those solutions.

First pointer processor 127 receives signals on working transmission channel 126W at a payload extractor 150W, and second pointer processor 129 receives signals on protect transmission channel 126P at a payload extractor 150P. Payload extractors 150W, 150P extract payload information from frames received and enter the extracted payload information into elastic buffer-rebuild frame units 152W, 152P. The payload information is preferably clocked into elastic buffer-rebuild frame units 152W, 152P using a common receive clock 151. Alternatively, each elastic buffer-rebuild frame unit 152W, 152P may employ its own respective receive clock for clocking in payload information. Elastic buffer-rebuild frame units 152W, 152P rebuild frames received and, in the aspect of such rebuilding that pertains to the present invention, locate the payload of each rebuilt frame according to the payload pointer value then extant. One must keep in mind that some telecommunication system standards, such as the SONET standard, allow payload to "float" within a frame during transit. In such a case, it is not necessarily true that frames in a frame-set carried on parallel transmission channels 126W, 126P will have their respective payloads situated in precisely the same loci. They will have different payload pointer values because the payload pointer values indicate the loci of the payload information in the respective frames. When the payload pointer values differ, and therefore the loci of the information payloads differ between frames in a frame-set, there will be an error if the telecommunication system switches from one channel to another channel. It is this error which is avoided by the present invention.

Elastic buffer-rebuild frame units 152W 152P present rebuilt frame-sets that have been frame-aligned (but not necessarily payload-aligned) on internal channels 154W, 154P to switch module 155. Preferably, frames in a frame-set are each respectively clocked out of elastic buffer-rebuild frame units 152W, 152P using a common clock, such as system clock 153 that is used to clock activities downstream of elastic buffer-rebuild frame units 152W, 152P.

Switch module 155 includes a multiplexer 156, pointer follower units 160W, 160P, a differentiator, or difference unit 162 and a pointer observer unit 164. Internal channels 154W, 154P present signals carried thereon to multiplexer 156. Multiplexer 156 operates on signals received from internal channels 154W, 154P in a manner similar to the operation of multiplexer 28 with signals received on internal channels 31W, 31P (Fig. 1). In order to avoid prolixity, it may be concluded simply that signals carried on one of internal channels 154W, 1554P will be presented on a single-channel 158 by multiplexer 156 for further processing downstream.

Internal channels 154W, 154P also present signals carried thereon to pointer follower units 160W, 160P. Pointer follower units 160W, 160P extract payload pointer values from frames received on their respective internal channels 154W, 154P and pass those values to difference unit 162. Payload pointer follower units 160W, 160P may be embodied in any payload pointer follower means that can recognize and deal with payload pointer values contained in frames of frame-sets provided to them. In their preferred embodiment, payload follower pointer means according to the present invention may be embodied in software, firmware, hardware or a combination of those solutions. The most preferred embodiment of a payload pointer follower means in the present invention is a software implementation.

Difference unit 162 ascertains a difference value reflecting modulo differences in payload pointer values received on internal channels 154W, 154P. That is, difference unit 162 determines the amount of misalignment existing in respective frames in frame-sets appearing on internal channels 154W, 154P. Difference unit 162 is an embodiment of a differentiator means, or difference means used in practicing the present invention.

In its simplest embodiment for addressing a communication system employing only two parallel channels for carrying corresponding frame-sets, and assuming that the maximum payload difference is expected to be less than one-half of the range that may be addressed by the payload pointer, the difference means may be embodied in a summing device that determines an arithmetic difference between two payload pointer values provided to it. In the case where the maximum payload difference is expected to be larger than one-half of the range that may be addressed by the payload pointer, the difference means may employ additional information, such as additional overhead information, to determine the amount of misalignment existing over and above the amount that can be determined by using the payload pointer values alone. In the case where more than two channels are employed by the telecommunication system, the difference means may be constructed to provide a plurality of difference indications among the various payload pointer values. In an alternate example, difference means used in telecommunication systems having more than two channels may perform a weighting function to identify predetermined relationships among the various channels from which payload pointer values are received. The difference means of the present invention may be embodied in software, firmware, hardware or a combination of those solutions. In the preferred embodiment of the present invention, the difference means is embodied in a software solution.

Recall that frames appearing on internal channels 154W, 154P have been frame-aligned. Thus, misalignment of payload pointer values (indicating misalignment of payload loci in the frames of a frame-set) are entirely attributable to information loci misalignment. A signal indicating the sensed difference between payload pointer values in frames received on internal channels 154W, 154P is provided by difference unit 162 to pointer observer unit 164.

The pointer observer means may be embodied in any device that can ascertain the difference signal received from difference unit 162 and translate that difference signal into adjustment signals appropriate for use in maintaining payload pointer alignments (for example, when there is no indication of unacceptable misalignment), or for use in reducing misalignment found to exist. In its simplest embodiment for addressing a communication system employing only two parallel channels for carrying corresponding frame-sets, the pointer observer means may, for example, merely halve the difference signal received from difference unit 162 and create adjustment signals for the two channels based upon those half-magnitude signals. The direction of adjustment to be effected by the respective channels may be based upon the sign of the difference signal received from difference unit 162. In situations where two or more channels are employed in a telecommunication system, the pointer observer means may, for example, be configured to exercise a weighting operation in determining the adjustment signals to be produced. The pointer observer means of the present invention may be embodied in software, firmware, hardware or a combination of those solutions. In the preferred embodiment of the present invention, the pointer observer means is embodied in a software solution.

Pointer observer unit 164 uses the difference signal received from difference unit 162 to produce adjustment signals on feedback lines 166W, 166P to respective elastic buffer-rebuild frame units 152W, 152P. Elastic buffer-rebuild frame units 152W, 152P employ adjustment signals received via feedback lines 166W, 166P to adjust payload pointer values in later arriving frames to reduce misalignment between payloads in frame-sets. By so reducing misalignment of payloads, the difference signal provided by difference unit 162 to pointer observer unit 164 will be reduced. Ultimately, there will be zero misalignment; it is in such a situation that the present invention seeks to maintain alignment, to maintain a zero difference-indicating signal provided by difference unit 162 to pointer observer 164.

Some telecommunication system standards limit the amount of adjustment that can be imposed on a payload pointer value in a given adjustment. The SONET standard, for example, limits such payload pointer adjustments to one byte every three frames. In accommodating such a limitation, if there is a misalignment of greater than one byte between payload pointer values in frames in a frame-set, full correction will be iteratively accomplished. That means that payload-misaligned frame-sets will be passed from multiplexer 156 on single-channel 158 (Fig. 2) until the misalignment may be fully corrected in the required iterative stepwise fashion in such circumstances.

Absent such limitations as may be imposed by a telecommunication standard, one must ensure that the size of elastic buffer-rebuild frame units 152W, 152P are large enough to accommodate the greatest amount of adjustment expected to be required in the system. If too little capacity is provided for elastic buffer-rebuild frame units 152W, 152P, there can be buffer spillover. Buffer spillover is an undesirable occurrence because it can introduce bit errors into the transmitted information.

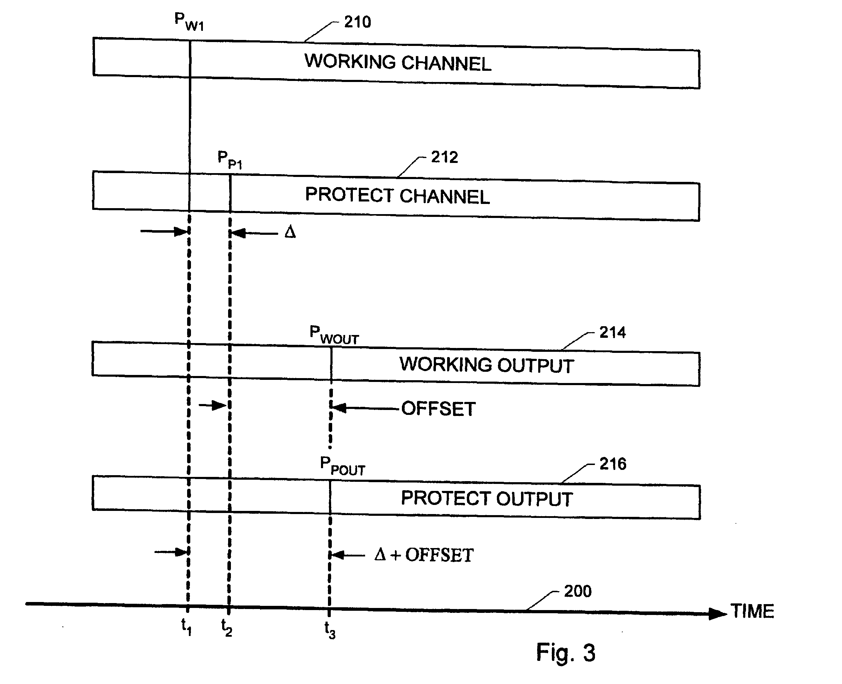

Fig. 3 is a schematic diagram illustrating parameters associated with aligning pointers between two communication channels in a telecommunication system. In Fig. 3, representative communication channels are arrayed against a time basis, indicated by a time line 200. Times occurring further to the right on time line 20 in Fig. 3 are later in time. A working channel 210 and a protect channel 212 represent communication channels before alignment, such as communication channels 26W, 26P in Fig. 1. A working output channel 214 and a protect output channel 216 represent communication channels after alignment, such as communication channels 31W, 31P in Fig. 1.

Working channel 210 includes a payload having a payload pointer P_{W1} that occurs at a time t₁. Protect channel 212 includes a payload having a payload pointer P_{P1} that occurs at a time t₂. Payload pointers P_{W1}, P_{P1} indicate a particular locus associated with their respective payloads included in channels 210, 212. Payload pointer P_{P1} occurs following payload pointer P_{W1} by a delay Δ; delay Δ has a duration defined by the time interval t₁ - t₂. Working output channel 214 includes a payload having a payload pointer P_{WOUT} and protect output channel 216 includes a payload having a payload pointer P_{POUT}. Payload pointers P_{WOUT}, P_{POUT} each occur at a time t₃. The time interval t₂-t₃ is an offset interval. An offset interval is imposed on frames that are frame-aligned (e.g., as occurs in pointer processors 27, 29; Fig. 1) even in situations in which no frame misalignment occurs. This is done in order to account for known overhead information that a payload buffer will always contain. In situations in which frame misalignment occurs, such as the situation illustrated in Fig. 3, payload pointer P_{P1} is delayed for an offset interval (having a duration t₂ - t₃ in Fig. 3) to account for the normal delay provided to allow for payload buffer overhead information. However, because there is a delay Δ between payload pointers P_{W1}, P_{P1} (having a duration t₁ - t₂ in Fig. 3), payload pointer P_{W1} must be delayed a greater amount than the delay that is imposed upon payload pointer P_{P1} in order that both payload pointers P_{WOUT}, P_{POUT} will be coincident at time t₃. That is, payload pointer P_{W1} must be delayed for an interval in the amount of (Δ + OFFSET); a delay having a duration t₁ - t₃ .

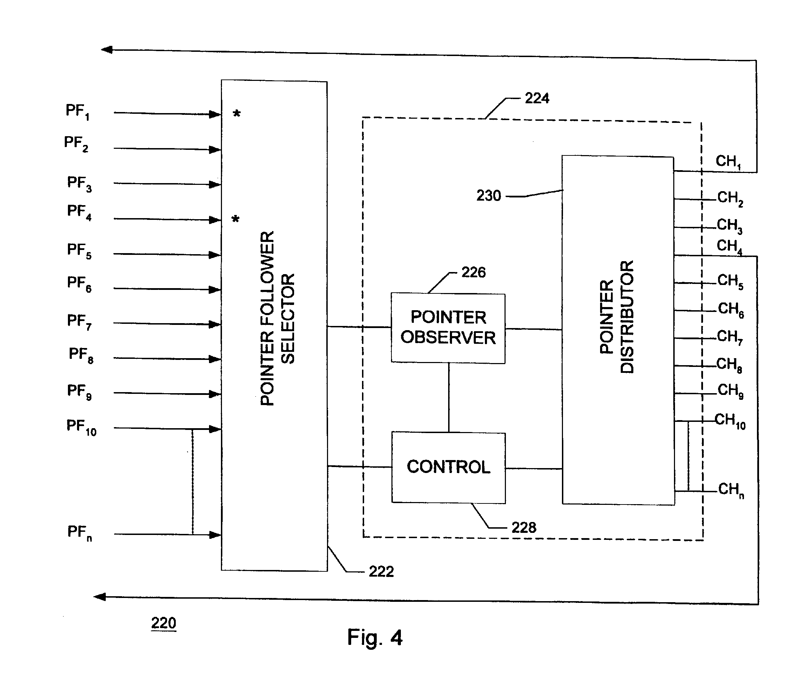

Fig. 4 is a schematic diagram of an embodiment of the present invention. In Fig. 4, an apparatus 220 is illustrated that is configured for controlling employment of pointer values for coordinating alignment of payload information among a plurality of channel-pairs in a telecommunication system. Apparatus 220 includes a pointer follower selector 222 that receives a plurality of pointer value input lines PF₁, PF₂,...PFₙ. Preferably, pointer value input lines PF₁, PF2, ...PFₙ are arranged in operational pairs for employment in parallel communication operations. Thus, for example, pointer value input lines PF₁, PF₄ (indicated by asterisks "*" in Fig. 4) may be paired for operation as a working and protect channel-pair in apparatus 220. Other channel-pairs may be configured (not shown in detail in Fig. 4) as established by software, hardware, or firmware arrangements, or by a combination of such arrangements. Pointer follower selector 222 is coupled with a distribution block 224. Distribution block 224 includes a pointer observer 226, a control unit 228 and a pointer distributor 230. Preferably, pointer observer 226 and control unit 228 are mutually coupled and are coupled with pointer follower selector 222. Further, pointer observer 226 and control unit 228 are coupled with pointer distributor 230.

The control means may be embodied in any device that can affect operation of other components in apparatus 220. A control means may include a microprocessor unit or any other device that employs software, hardware, firmware or any combination of software, hardware and firmware to effect the requisite control expected for operation of apparatus 220 as described herein.

Apparatus 220 preferably operates in a time-multiplexed mode by which control unit 228 directs pointer follower selector 222 to select particular channel-pairs (e.g., pointer value input lines PF1, PF4) at particular times for forwarding the extant pointer values for the currently-selected channel-pair to pointer observer 226. Pointer observer 228 cooperates with control unit 228 to ascertain delay intervals necessary to accomplish desired alignment and generates updated pointer values for passing on to pointer distributor 230.

The pointer distributor means may be embodied in any device that can carry out distribution of signals received at an input side to selected loci situated at an output side, all in cooperation with another device, such as a control means or a pointer observer means, or both a control means and a pointer observer means. The pointer distributor means may be, for example, a multiplexing configuration that employs software, hardware, firmware or any combination of software, hardware and firmware to effect the requisite distribution expected for operation of apparatus 220 as described herein.

Pointer distributor 230 provides updated pointer values to appropriate pointer processor units (not shown in Fig. 4) for rebuilding frames using the updated pointer values. Pointer distributor 230 cooperates with control unit 228 to ensure that distribution is effected to appropriate channels (e.g., channels CH₁, CH₄ in Fig. 4) for the pointer values being updated (e.g., pointer value input lines PF₁, PF₄ in Fig. 4). Preferably, apparatus 220 addresses all channel-pairs among pointer value input lines PF₁, PF2,...PFₙ in turn according to a predetermined scheme in a time-multiplexed stepwise arrangement.

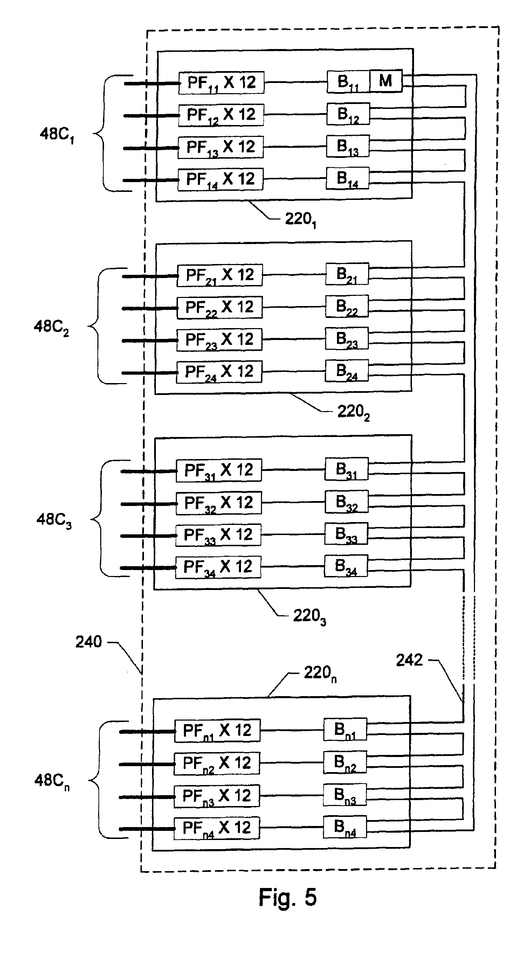

Fig. 5 is a schematic diagram of the preferred embodiment of the present invention. In Fig. 5, a system 240 includes a plurality of control apparatuses 220₁, 220₂, 220₃,... 220ₙ. Each control apparatus 220₁, 220₂, 220₃, ... 220ₙ serves a communication channel aggregate 48C1, 48C2, 48C3, ... 48Cn. In the embodiment of the present invention illustrated in Fig. 5, each communication channel aggregate includes forty-eight individual channels (not shown in detail in Fig. 5), and each communication channel aggregate is coupled with a respective pointer follower selector. Respective pointer follower selectors each service 12 communication channels. Thus, communication channel aggregate 48C₁ is coupled with pointer follower selectors PF₁₁, PF₁₂, PF₁₃, PF₁₄ in control apparatus 220₁. Similarly, communication channel aggregate 48C₂ is coupled with pointer follower selectors PF₂₁, PF₂₂, PF₂₃, PF₂₄ in control apparatus 220₂. Communication channel aggregate 48C₃ is coupled with pointer follower selectors PF₃₁, PF₃₂, PF₃₃, PF₃₄ in control apparatus 220₃. Communication channel aggregate 48Cₙ is coupled with pointer follower selectors PFₙ₁, PFₙ₂, PFₙ₃, PFₙ₄ in control apparatus 220ₙ. The use of the denomination "n" is intended to indicate that there is no theoretical limit to the number of channels that may be controlled using the present invention.

Each pointer follower selector is coupled with a distribution block. Thus, pointer follower selector PF₁₁ is coupled with distribution block B₁₁, pointer follower selector PF₁₂ is coupled with distribution block B₁₂, pointer follower selector PF₁₃ is coupled with distribution block B₁₃, and pointer follower selector PF₁₄ is coupled with distribution block B₁₄ in control apparatus 220₁. Pointer follower selector PF₂₁ is coupled with distribution block B₂₁, pointer follower selector PF₂₂ is coupled with distribution block B₂₂, pointer follower selector PF₂₃ is coupled with distribution block B₂₃, and pointer follower selector PF₂₄ is coupled with distribution block B₂₄ in control apparatus 220₂. Pointer follower selector PF₃₁ is coupled with distribution block B₃₁, pointer follower selector PF₃₂ is coupled with distribution block B₃₂, pointer follower selector PF₃₃ is coupled with distribution block B₃₃, and pointer follower selector PF₃₄ is coupled with distribution block B₃₄ in control apparatus 220₃. Pointer follower selector PFₙ₁ is coupled with distribution block Bₙ₁, pointer follower selector PFₙ₂ is coupled with distribution block Bₙ₂, pointer follower selector PFₙ₃ is coupled with distribution block Bₙ₃, and pointer follower selector PFₙ₄ is coupled with distribution block Bₙ₄ in control apparatus 220ₙ.

A communication bus 242 couples each control apparatus 220₁, 220₂, 220₃, ... 220ₙ appropriately to enable distribution blocks Bₓₓ to communicate. One distribution block B₁₁ includes a master M that exercises primary control among all distribution blocks Bₓₓ. Distribution blocks Bₓₓ cooperate, under the direction of master M, in addressing their respective channel-pairs in a respective communication channel aggregate 48C₁, 48C₂, 48C₃ ... 48Cₙ using an appropriate respective pointer follower selector PFₓ₁, PFₓ₂, PFₓ₃, PFₙ₄ to retrieve pointer values, determine differences between pointer values in channel-pairs, ascertain revised pointer values and distribute revised pointer values to appropriate pointer processors (not shown in Fig. 5). Preferably these functions are carried out in a time-multiplexed arrangement in which specific channel-pairs are handled in predetermined time slots to facilitate proper determination of values and their proper distribution.

There is nothing in the design of the apparatus of the present invention that precludes any combination of assignment of channels in forming a channel-pair. That is, a channel-pair may include a channel from different channel aggregates or from different channel positions within channel aggregates, if desired. As a matter of simplifying programming, wiring or other software, firmware or hardware arrangements to be employed in implementing the present invention, certain restrictions may be exercised in assigning individual channels to channel-pairs. Thus, it may be desired, for example, that channel-pairs may only be selected from like-numbered channels in different channel aggregates. Other selection disciplines may be employed in addition to or instead of such a criterion.

In the embodiment of the present invention illustrated in Fig 5, there is only one master M. There may be more than one master; it may be advantageous to carry out the functions of a master in a distributed processing arrangement. Such a construction may be employed using the apparatus or method of the present invention.

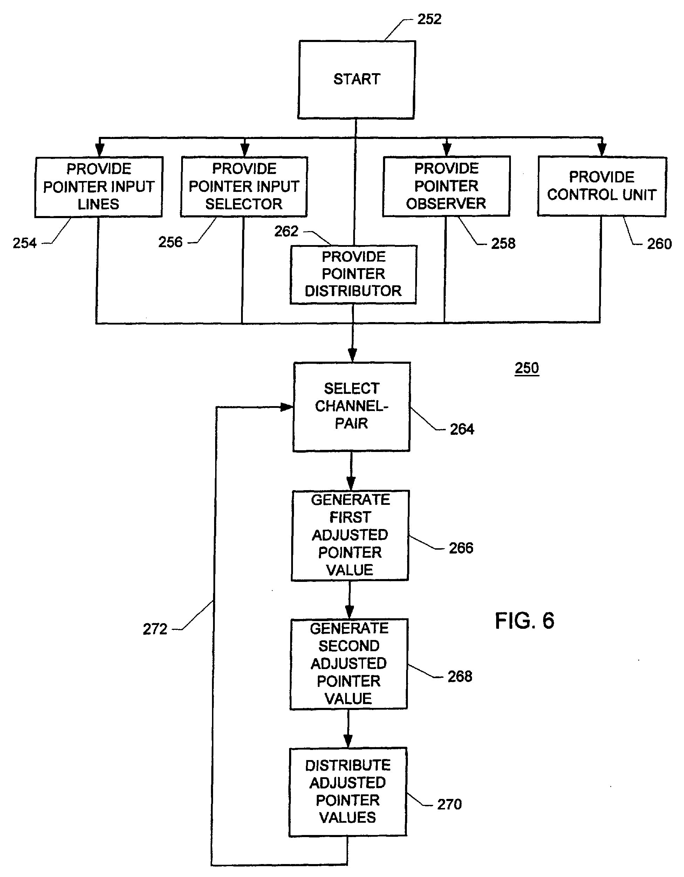

Fig. 6 is a flow chart illustrating the preferred embodiment of the method of the present invention. In Fig. 6, a method 250 for controlling employment of pointer values for coordinating alignment of payload information among a plurality of channel-pairs in a telecommunication system begins, as indicated by a block 252. Each respective channel-pair of the plurality of channel-pairs includes a first communication channel and a second communication channel among a plurality of communication channels. Each first and second communication channel carries substantially similar information arranged in a plurality of generally time-coincident, substantially corresponding frames. A predetermined aspect of each frame, such as a locus associated with a payload included within the frame, is indicated by a pointer value. The method continues with the step of, in no particular order;
(1) providing a plurality of pointer value input lines, as indicated by a block 254. The pointer value input lines are coupled with the plurality of communication channels. Each channel-pair has a respective first pointer value associated with its first communication channel and a respective second pointer value associated with its second communication channel.
(2) providing at least one pointer value input selector, as indicated by a block 256. The pointer value input selectors are configured for selective coupling with particular pointer value input lines.
(3) providing at least one pointer observer unit, as indicated by a block 258. The pointer observer units are coupled with the pointer value input selectors.
(4) providing at least one control unit, as indicated by a block 260. The control units are coupled with the pointer value selector units and the pointer observer units.
(5) providing at least one pointer value distributor unit, as indicated by a block 262. The pointer value distributor units are coupled with the pointer observer units and the control units.

The method continues with selecting a selected channel-pair from the plurality of channel-pairs, as indicated by a block 264.

The method next provides for cooperatively operating the at least one pointer value input selector, the at least one observer unit and the at least one control unit according to a predetermined arrangement to generate a first adjusted pointer value for a respective first communication channel associated with the selected channel-pair, as indicated by a block 266.

Next the at least one pointer value input selector, the at least one pointer observer unit and the at least one control unit are cooperatively operated according to the predetermined arrangement to generate a second adjusted pointer value for a respective second communication channel associated with the selected channel-pair, as indicated by a block 268. The steps represented by blocks 266, 268 are performed in a manner to generate the first adjusted pointer value and the second adjusted pointer value appropriately to reduce differences between the first adjusted pointer value and the second adjusted pointer value.

The method continues by cooperatively operating the at least one pointer value distributor unit with the at least one control unit and the at least one pointer observer unit to carry out correct distribution of the first adjusted pointer indicator value and the second adjusted pointer indicator value to the selected channel-pair, as indicated by a block 270.

The method includes returning to select a new selected channel-pair for continued practice of the method, as indicated by a return line 272.

It is to be understood that, while the detailed drawings and specific examples given describe preferred embodiments of the invention, they are for the purpose of illustration only, that the apparatus and method of the invention are not limited to the precise details and conditions disclosed and that various changes may be made therein without departing from the spirit of the invention which is defined by the following claims:

## Claims

1. An apparatus for controlling employment of pointer values for coordinating alignment of payload information among a plurality of channel-pairs in a telecommunication system; each respective channel-pair of said plurality of channel-pairs including a respective first communication channel and a respective second communication channel among a plurality of communication channels; each said respective first communication channel and each said respective second communication channel carrying substantially similar information arranged in a plurality of generally time-coincident, substantially corresponding frames; a predetermined aspect of each frame of said plurality of frames being indicated by a pointer value; the apparatus comprising:
(a) a plurality of pointer value input lines coupled with said plurality of communication channels; each said respective channel-pair having a respective first pointer value associated with said respective first communication channel and a respective second pointer value associated with said respective second communication channel;
(b) at least one pointer value input selector; said at least one pointer value input selector being configured for selective coupling with particular pointer value input lines of said plurality of pointer value input lines;
(c) at least one pointer observer unit coupled with said at least one pointer value input selector;
(d) at least one control unit coupled with said at least one pointer value input selector and coupled with said at least one pointer observer unit; and
(e) at least one pointer value distributor unit coupled with said at least one pointer observer unit and coupled with said at least one control unit;
said at least one pointer value input selector, said at least one pointer observer unit and said at least one control unit cooperating according to a predetermined arrangement to generate a first adjusted pointer value for each said respective first communication channel and to generate a second adjusted pointer value for each said respective second communication channel; said adjustment being generated appropriately to effect reduction of differences between said first adjusted pointer value and said second adjusted pointer value; said at least one pointer value distributor unit cooperating with said at least one control unit and said at least one pointer observer unit to effect correct distribution of said first adjusted pointer indicator value and said second adjusted pointer indicator value to said particular selected channel-pair.

2. An apparatus for controlling employment of pointer values for coordinating alignment of payload information among a plurality of channel-pairs in a telecommunication system as recited in Claim 1 wherein said plurality of communication channels is arranged in a plurality of aggregates; each aggregate of said plurality of aggregates being coupled with a respective set of pointer value input lines of said plurality of pointer value input lines.

3. An apparatus for controlling employment of pointer values for coordinating alignment of payload information among a plurality of channel-pairs in a telecommunication system as recited in Claim 1 wherein said plurality of communication channels is arranged in a plurality of aggregates; each aggregate of said plurality of aggregates being coupled with a respective said pointer value input selector of said at least one pointer value input selector.

4. An apparatus for controlling employment of pointer values for coordinating alignment of payload information among a plurality of channel-pairs in a telecommunication system as recited in Claim 2 wherein each respective said set of pointer value input lines is coupled with a respective pointer value input selector of said at least one pointer value input selector.

5. An apparatus for controlling employment of pointer values for coordinating alignment of payload information among a plurality of channel-pairs in a telecommunication system as recited in Claim 4 wherein each aggregate of said plurality of aggregates has an associated respective control unit of said at least one control unit.

6. An apparatus for controlling employment of pointer values for coordinating alignment of payload information among a plurality of channel-pairs in a telecommunication system as recited in Claim 5 wherein each aggregate of said plurality of aggregates has an associated respective pointer value distributor unit of said at least one pointer value distributor unit.

7. An apparatus for controlling employment of pointer values for coordinating alignment of payload information among a plurality of channel-pairs in a telecommunication system as recited in Claim 1 through 6 wherein said at least one control unit is a plurality of control units; and wherein at least one control unit and less than all control units of said plurality of control units is a master control unit; said at least one master control unit exercising primary control over operation of the apparatus; said plurality of control units being coupled with a common bus.

8. A method for controlling employment of pointer values for coordinating alignment of payload information among a plurality of channel-pairs in a telecommunication system; each respective channel-pair of said plurality of channel-pairs including a respective first communication channel and a respective second communication channel among a plurality of communication channels; each said respective first communication channel and each said respective second communication channel carrying substantially similar information arranged in a plurality of generally time-coincident, substantially corresponding frames; a predetermined aspect of each frame of said plurality of frames being indicated by a pointer value; the method comprising the steps of:
(a) In no particular order:
(1) providing a plurality of pointer value input lines coupled with said plurality of communication channels; each said respective channel-pair having a respective first pointer value associated with said respective first communication channel and a respective second pointer value associated with said respective second communication channel;
(2) providing at least one pointer value input selector; said at least one pointer value input selector being configured for selective coupling with particular pointer value input lines of said plurality of pointer value input lines;
(3) providing at least one pointer observer unit coupled with said at least one pointer value input selector;
(4) providing at least one control unit coupled with said at least one pointer value input selector and coupled with said at least one pointer observer unit; and
(5) providing at least one pointer value distributor unit coupled with said at least one pointer observer unit and coupled with said at least one control unit;
(b) designating a selected channel-pair among said plurality of channel-pairs;
(c) cooperatively operating said at least one pointer value input selector, said at least one pointer observer unit and said at least one control unit according to a predetermined arrangement to generate a first adjusted pointer value for a respective said first communication channel associated with a selected channel-pair;
(d) cooperatively operating said at least one pointer value input selector, said at least one pointer observer unit and said at least one control unit according to a predetermined arrangement to generate a second adjusted pointer value for a respective said second communication channel associated with said selected channel-pair; effecting steps (c) and (d) to generate said first adjusted pointer value and said second adjusted pointer value appropriately to effect reduction of differences between said first adjusted pointer value and said second adjusted pointer value;
(e) cooperatively operating said at least one pointer value distributor unit with said at least one control unit and said at least one pointer observer unit to effect correct distribution of said first adjusted pointer indicator value and said second adjusted pointer indicator value to said particular selected channel-pair;
(f) designating a next selected channel-pair among said plurality of channel pairs; and
(g) repeating steps (c) through (g).

9. A method for controlling employment of pointer values for coordinating alignment of payload information among a plurality of channel-pairs in a telecommunication system as recited in Claim 8 wherein said plurality of communication channels is arranged in a plurality of aggregates; each aggregate of said plurality of aggregates being coupled with a respective set of pointer value input lines of said plurality of pointer value input lines.

10. A method for controlling employment of pointer values for coordinating alignment of payload information among a plurality of channel-pairs in a telecommunication system as recited in Claim 8 wherein said plurality of communication channels is arranged in a plurality of aggregates; each aggregate of said plurality of aggregates being coupled with a respective said pointer value input selector of said at least one pointer value input selector.

11. A method for controlling employment of pointer values for coordinating alignment of payload information among a plurality of channel-pairs in a telecommunication system as recited in Claim 9 wherein each respective said set of pointer value input lines is coupled with a respective pointer value input selector of said at least one pointer value input selector.

12. A method for controlling employment of pointer values for coordinating alignment of payload information among a plurality of channel-pairs in a telecommunication system as recited in Claim 11 wherein each aggregate of said plurality of aggregates has an associated respective control unit of said at least one control unit.

13. A method for controlling employment of pointer values for coordinating alignment of payload information among a plurality of channel-pairs in a telecommunication system as recited in Claim 12 wherein each aggregate of said plurality of aggregates has an associated respective pointer value distributor unit of said at least one pointer value distributor unit.

14. A method for controlling employment of pointer values for coordinating alignment of payload information among a plurality of channel-pairs in a telecommunication system as recited in Claim 8 through 13 wherein said at least one control unit is a plurality of control units; and wherein at least one control unit and less than all control units of said plurality of control units is a master control unit; said at least one master control unit exercising primary control over operation of the apparatus; said plurality of control units being coupled with a common bus.

15. An apparatus for managing alignment of payload frames within information frames between channel-pairs; said channel-pairs being among a plurality of communication channels; the apparatus comprising:
(a) at least one pointer selector unit coupled to receive payload pointer values for selected communication channels of said plurality of communication channels;
(b) at least one pointer observer unit coupled with said at least one pointer selector unit;
(c) at least one control unit coupled with said at least one pointer selector unit and coupled with said at least one pointer observer unit; and
(d) at least one pointer value distributor unit coupled with said at least one pointer observer unit and coupled with said at least one control unit;
said at least one pointer selector unit and said at least one pointer observer unit responding to said at least one control unit to generate a respective adjusted payload pointer value for each respective channel of each said channel-pair; said respective adjusted payload pointer values for each respective channel of each said channel-pair cooperating to reduce a difference between payload pointer values for each said channel-pair; said at least one pointer value distributor unit and said at least one pointer observer unit cooperating with said at least one control unit to distribute each said respective adjusted payload pointer value to its respective channel.

16. An apparatus for managing alignment of payload frames within information frames between channel-pairs as recited in Claim 15 wherein said plurality of communication channels is arranged in a plurality of aggregates; each aggregate of said plurality of aggregates being coupled with a respective pointer selector unit of said at least one pointer selector unit.

17. An apparatus for managing alignment of payload frames within information frames between channel-pairs as recited in Claim 16 wherein each aggregate of said plurality of aggregates has an associated respective control unit of said at least one control unit.

18. An apparatus for managing alignment of payload frames within information frames between channel-pairs as recited in Claim 17 wherein each aggregate of said plurality of aggregates has an associated respective pointer value distributor unit of said at least one pointer value distributor unit.

19. An apparatus for managing alignment of payload frames within information frames between channel-pairs as recited in Claim 15 through 18 wherein said at least one control unit is a plurality of control units; and wherein at least one control unit and less than all control units of said plurality of control units is a master control unit; said at least one master control unit exercising primary control over operation of the apparatus; said plurality of control units being coupled with a common bus.
